# EUROPEAN PATENT SPECIFICATION

(11) **EP 2 584 893 B1**
(45) Date of publication and mention of the grant of the patent: **26.10.2016**
(21) Application number: 11736136.0
(22) Date of filing: 22.06.2011
(51) Int. Cl.: A01K 61/00, A01K 63/04

(54) **GROWING CRUSTACEANS**
ZÜCHTUNG VON KRUSTENTIEREN
CULTURE DE CRUSTACÉS

(30) Priority: 22.06.2010 GB 201010468
(43) Date of publication of application: 01.05.2013
(73) Proprietor: Shellfish Hatchery Systems Ltd, Deerness Orkney KW17 2QL (GB)
(72) Inventor: Growland, Denis Stepen, Deerness, Orkney KW17 2QL (GB); Land, Richard Andrew, 3330-220 Gois (PT)
(74) Representative: Mansfield, Peter Turquand
(86) International application number: PCT/GB2011/051166
(87) International publication number: WO 2011/161449

(56) References cited:
- GB-A- 2 168 231
- JP-A- 1 005 438
- US-A- 3 967 585
- US-A- 4 250 835

## Description

The present invention relates to an apparatus and a method for growing baby crustaceans, such as crabs or lobsters and other members of the order of crustaceans known as Decapoda.

A variety of shellfish and fish are raised successfully through aquaculture or fish farms. For example GB 2 168 231 A describes a vessel for raising fish or shrimps, consisting of a generally cylindrical vessel with a stepped conical base, and with a coaxial downpipe on its axis extending from a weir. Water is introduced tangentially near the bottom of the cylindrical wall, and flows out through the downpipe. Radial mesh walls subdivide the vessel into sectors for fish of different sizes, and the angles between the mesh walls are adjusted as the fish grow, so as to ensure an optimum weight of fish per unit volume.

Lobsters, however, are not easy to raise in captivity, two of the problems being that lobsters in close proximity tend to eat each other; and that lobsters grow very slowly, taking several years to grow to a commercial size. Another approach is to keep lobsters captive only from the stage of the egg hatching to the fourth or fifth growth stage, at which point they start to settle on the bottom. This is advantageous because when lobsters initially hatch, the young lobsters are very small, and initially live in a planktonic fashion, freely floating in the sea. At this stage the lobsters are likely to suffer predation, being eaten by other creatures. When the lobsters have reached the size at which they settle on the bottom, the hatchery operators free the baby lobsters into the sea, hoping that they survive in the wild long enough to grow to maturity. Crabs may also be raised in this way, and then released into the wild. For example, after hatching, blue crabs can grow to a size of about 20 mm, after 6-7 moults, over a period of about two months, and then can be released.

An aim of the present invention is to provide an apparatus to improve the conditions for such baby crustaceans while ensuring they do not eat each other, until they grow large enough that they can fend for themselves.

According to the present invention there is provided an apparatus suitable for growing baby crustaceans, as specified in claim 1.

Preferably the apparatus comprises two recirculation means. The first recirculation means preferably also circulates the water through the biofilter to remove any toxins. The second recirculation means provides an alternative and adjustable flow of water through the apparatus, and would be used when feeding the baby crustaceans.

Whenever the baby crustaceans are being provided with food, the second recirculation means would be activated (rather than the first recirculation means). An operator can easily pour food material into the recirculating water at the top end of the duct, so that it is carried down the duct and distributed to the tank.

During periods when the baby crustaceans are not being fed, the first recirculation means would be activated (rather than the secondary circulation means). The first recirculation means produces a larger flow rate of water. By circulating the water through the biofilter any toxins are removed, and the recirculation avoids the development of stagnant regions of water within the tank.

The perforations in the base of the trays may be of diameter between 1 mm and 3 mm. Such trays are particularly suitable for baby crustaceans that are of a size greater than about 3 mm. The perforations ensure that the water circulates through every compartment of every tray. Preferably the first recirculation means produces a swirling flow at the inlet to the tank, so that the pressure causing the flow of water through the trays is substantially uniform across the tank.

The invention also provides a method of growing baby crustaceans according to claim 9 using such an apparatus. The method preferably involves circulating the water through a biofilter for some period of time; and then circulating the water without passing through the biofilter while providing the baby crustaceans with food. These two circulation steps are applied alternately and repeatedly.

The invention will now be further and more particularly described, by way of example only, and with reference to the accompanying drawings in
Figure 1 shows a longitudinal sectional view through an apparatus of the invention; and
Figure 2 shows a transverse sectional view on the line 2-2 of figure 1, also showing the external flow components diagrammatically.

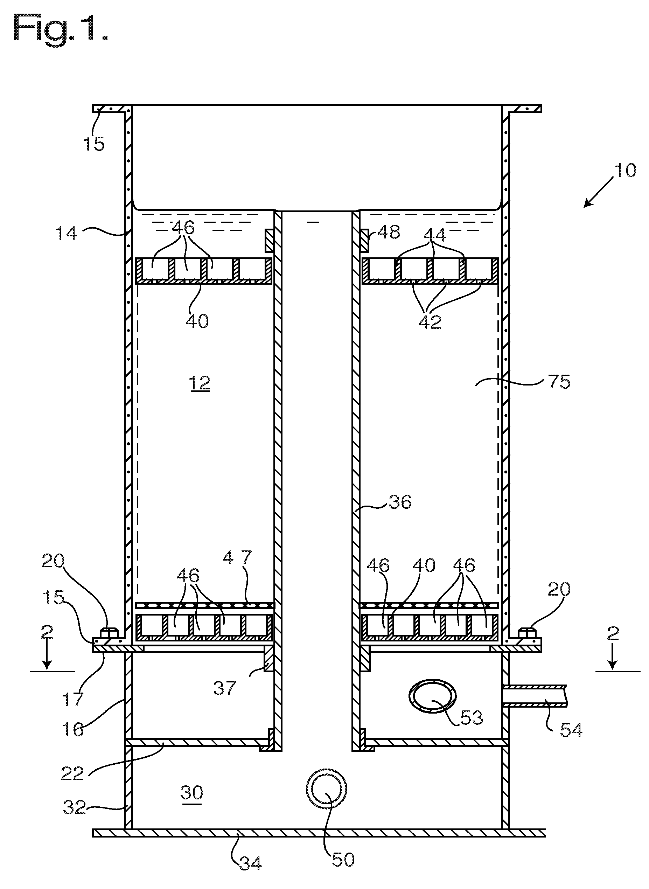

Referring to figure 1 an apparatus 10 for growing baby lobsters comprises a cylindrical tank 12 which may for example be of internal diameter 400 mm. In this example the tank 12 has an upper part of length 650 mm defined by a transparent acrylic tube 14 with external flanges 15 at each end, and a lower part defined by a 100 mm section of PVC tube 16 to the upper edge of which is fixed a flat ring 17 of PVC. The flat ring 17 defines an external flange, and bolts 20 are used to connect the acrylic tube 14 to the flat ring 17; the flat ring 17 also projects about 10 mm inside the tube 16, so defining an internal flange.

The bottom of the tank 12 is defined by a flat plate 22 of PVC fixed to the bottom of the section of PVC tube 16. Below the tank 12 is a base chamber 30, defined by a 100 mm section of PVC tube 32, and closed at its bottom by a base plate 34 also of PVC. The flat plate 22 defines a central aperture into which is fixed a PVC pipe 36 that extends upwardly along the longitudinal axis of the tank 12 to near the top of the tank 12, the pipe 36 being open at each end. This pipe 36 hence provides communication between the base chamber 30 and the top part of the tank 12. The outer surface of the pipe 36 is threaded from its top down to within the PVC tube 16, the lowermost portion of the outer surface not being threaded, and a PVC nut 37 is screwed onto the pipe 36 so that the upper edge of the nut 37 is at the same height as the top of the flat ring 17.

Within the tank 12 several trays 40 are arranged as a stack (only the top and bottom trays 40 being shown, for clarity). Each tray 40 is annular, so as to locate in the annular space between the pipe 36 and the tube 14, and the bottom tray 40 rests on the nut 37 and on the internal flange provided by the flat ring 17. Each tray 40 defines an array of perforations 42 each of diameter 3 mm, spaced apart by about 10 mm; and on its upper face are projecting fins 44 defining a multiplicity of open-topped compartments 46. Typically a compartment 46 might have dimensions 50 mm by 25 mm, so that several perforations 42 communicate with each compartment 46. By way of example the compartments 46 might be of rectangular shape in plan, or might be of hexagonal shape or half-hexagon shape, or triangular shape in plan; the preferred embodiment has half-hexagonal shaped compartments 46. In use one baby lobster would be put into each compartment 46 of each tray 40; the fins 44 ensure that the lobsters do not have access to one another, so there is no risk of them eating each other. Each tray 40 is covered by a 3 mm sheet 47 of nylon mesh defining 2 mm holes, ensuring that the lobsters remain within the compartments 46. The top tray 40, which does not contain any lobsters, is secured by a collar 48 screwed onto the top of the tube 36.

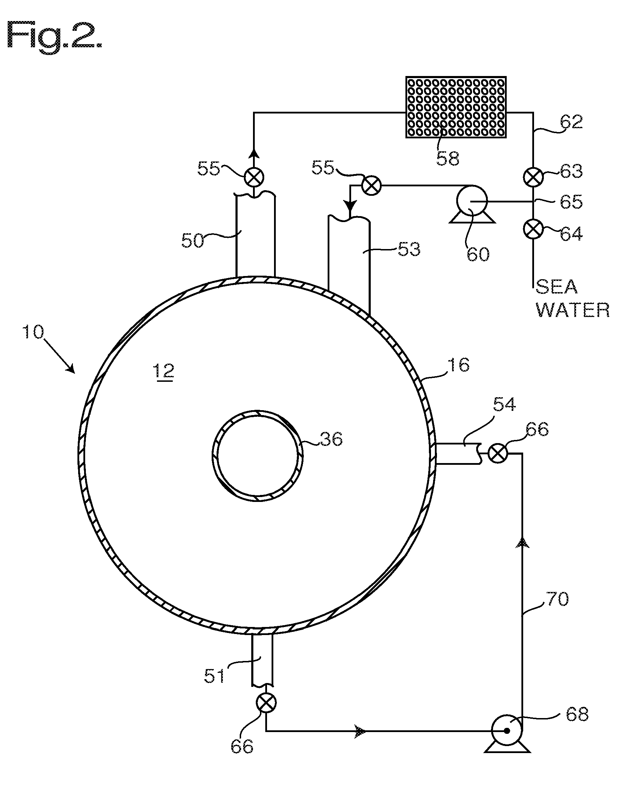

Referring also to figure 2, two pipes 50 and 51 communicate with the base chamber 30, being arranged diametrically opposite each other. The pipe 50 is of diameter 50 mm whereas the pipe 51 (not shown in figure 1) is of diameter 25 mm. Two pipes 53 and 54 communicate with the annular lower part of the tank 12 defined by the PVC tube 16. The pipe 53 is of diameter 50 mm and, as shown particularly in figure 2, is aligned along a non-radial path; the pipe 54 is of diameter 25 mm, and is aligned radially.

As shown in figure 2, the pipes 50 and 53 are each provided with valves 55, and are connected via biofilter 58 and a recirculation pump 60 to form a first recirculation loop 62. This first recirculation loop 62 also includes valves 63, 64 and a T-junction 65 communicating with a source of seawater. The pipes 54 and 51 are provided with valves 66, and are connected via a recirculation pump 68 to form a second recirculation loop 70.

In use of the apparatus 10 the trays 40 with baby lobsters in the compartments 46 and the cover sheets 47 are put into the tank 12, and are secured with the collar 48. Typically the lobsters would be about eight days old, and of length about 10 mm when first introduced into the apparatus 10. The tank 12 is then filled with seawater 75 to the top of the pipe 36; this may be achieved by opening valve 64, closing valve 63, and pumping seawater using the pump 60 into the pipe 53 and so into the tank 12. The apparatus 10 is then operated alternately in two different modes, non-feeding and feeding, repeatedly. Typically the non-feeding mode would be used most of the time, repeatedly. Typically the non-feeding mode would be used most of the time, while feeding would be applied for intervals of a few minutes once or twice a day.

In the non-feeding mode the seawater is recirculated through the recirculation loop 62, with the valve 64 closed and the valve 63 open. In this case the seawater is pumped vigorously into the annular lower part of the tank 12 below the trays, swirling around in this annular space because the duct 53 is not radial, and flowing upwardly through the trays 40, and then draining down the pipe 36. The swirling flow within the annular space below the trays 40 ensures substantially uniform pressure below the trays 40, and hence ensures substantially uniform flow over the entire cross-section of the tank 12. The seawater is recirculated through the biofilter 58 (shown diagrammatically) in which bacteria are arranged to remove or destroy toxins that might be present in the seawater, and in particular to break down nitrogenous waste material excreted by the lobsters. This may for example contain a bed of particulate material on which autotrophic bacteria grow; such bacteria can convert ammonium ions to nitrate ions.

To change to the feeding mode, the outlet valve 55 on the pipe 50 would be closed, so that the seawater flowing down the pipe 36 would gradually fill the base chamber 30 and the pipe 36. When the pipe 36 is almost full, the pump 60 would be switched off and the valve 55 on the inlet pipe 53 closed. In the feeding mode the seawater is recirculated through the recirculation loop 70. A foodstuff such as freeze-dried zooplankton mixed with water would be poured into the top of the tank 12, preferably into the top of the pipe 36, so that it is carried down the pipe 36, around the recirculation loop 70, and then pumped upwardly through the trays 40 in the tank 12. By way of example a suitable foodstuff is freeze-dried *Calanus* spp. such as C. *finmarchicus.* The flow rate during the feeding mode is significantly less than that during the non-feeding mode, and is such that the baby lobsters can catch the zooplankton as it passes through the compartments.

After recirculating in this feeding mode for a short period of time, such as five minutes, the apparatus 10 would be changed back to the non-feeding mode. This would entail switching off the pump 68 and closing the valves 66; would recirculate through the recirculation loop 62. Any foodstuff that is carried in the recirculating water out of the tank 12 will be caught by the biofilter 58.

Occasionally, when in the non-feeding mode, it may be desirable to drain out a proportion of the seawater, by turning off the recirculation pump 60 and opening both the valves 63 and 64 for a short period, and then replenishing with fresh seawater by closing the valve 63 and actuating the pump 60 for a short period. The normal recirculation can then be restarted. It will be appreciated that the recirculation loop 62 might also include other water-treatment units, such as a mechanical filter to remove particulate material, an activated carbon absorption pack, or a protein extractor, for example using vigorous air bubbling.

It will be appreciated that, in the non-feeding mode, the apparatus 10 might instead be operated in a once-through flow fashion, with valve 63 closed and valve 64 open, so the pump 60 provides fresh seawater to the tank 12; in this case the seawater emerging through the pipe 50 would be fed directly to drain.

One advantageous consequence of the pumped recirculation in both the feeding mode and the non-feeding mode is that the seawater within the apparatus 10 is at a temperature a few degrees above ambient, for example 5°C above ambient temperature, because of the energy from the recirculation pump 60 or 68, and this elevated temperature increases the growth rate of the lobsters. The apparatus 10 has been found suitable for growing lobsters until they get to a length of between 25 and 30 mm, this taking a period of about six weeks, and the young lobsters can then be released into the wild.

It will be appreciated that the apparatus 10 described above is by way of example only. An apparatus for growing baby crustaceans may differ from that described, for example being of different dimensions. An apparatus of the invention might be used for growing baby crabs or scampi, rather than for growing lobsters. The apparatus may also be modified in various ways. For example the inlet pipe 54 used during the feeding mode might be aligned non-radially, so that during feeding the recirculated water swirls around the bottom of the tank 12 below the trays 40.

It will be appreciated that the apparatus 10 enables the crustaceans to be fed while ensuring that the water does not contain toxins, so that the crustaceans grow well while remaining healthy.

It will be appreciated that several of the apparatuses 10 may be connected to a common recirculation loop 70. In larger systems it may be advantageous to operate a feeding cycle which provides food simultaneously to several of the apparatuses 10. The individual pump 68 on each apparatus 10 would be replaced by a single larger pump which would take water from the outlet pipes 51 of several apparatuses 10, and recirculate it to the corresponding inlet pipes 54; in this case the system would preferably also provide an alternative feeding port through which food can be introduced into the system.

## Claims

1. An apparatus (10) suitable for growing baby crustaceans, the apparatus comprising:
a cylindrical tank (12) of generally circular cross-section for containing water; a duct (36) extending upwardly along the longitudinal axis of the tank (12) to a position near the top of the tank, and a chamber (30) below the tank (12), the duct (36) extending from the chamber (30); and **characterised by** a plurality of annular trays (40) arranged as a stack and locating between the duct (36) and the cylindrical tank (12), each tray (40) defining compartments (46) to accommodate the baby crustaceans, the trays (40) having perforations (42) in their base for through-flow of water; and means (62) comprising a biofilter (58) to pass water through the duct (36) and the tank (12) and also through said biofilter (58) in a non-feeding mode; and further means (70) to recirculate water through the duct (36) and the tank (12) in a feeding mode.

2. An apparatus as claimed in claim 1 wherein at least one recirculation means (53) is connected to the base region (16) of the tank (12) in such a way as to impose a swirling flow of water around the base region (16) of the tank (12).

3. An apparatus as claimed in claim 1 or claim 2 comprising two recirculation means (62, 70), wherein the means to pass water through the duct (36) and the tank (12) in a non-feeding mode is a first recirculation means (62) which circulates the water through the biofilter (58).

4. An apparatus as claimed in any one of the preceding claims wherein the recirculation means (70) for use in the feeding mode is arranged to provide a flow rate equal to or less than that in the non-feeding mode.

5. An apparatus as claimed in claim 3 also comprising means (64) to enable water to be drained out from the first recirculation means (62), and to be replenished

6. An apparatus as claimed in claim 3 or claim 5 wherein the first recirculation means (62) also includes another water-treatment unit.

7. An apparatus as claimed in any one of the preceding claims wherein each tray (40) is covered with a mesh sheet (47).

8. An apparatus as claimed in claim 1 or claim 2 wherein, in the non-feeding mode, the apparatus (10) is such that water may be passed through the tank (12) in a once-through fashion.

9. A method of growing baby crustaceans using an apparatus (10) as claimed in any one of the preceding claims.

10. A method as claimed in claim 9 comprising circulating (62) the water through the biofilter (58) for a period of time; and then circulating (70) the water without passing through the biofilter (58) while providing the baby crustaceans with food, these two circulation steps being applied alternately and repeatedly.

## Patentansprüche

1. Eine Vorrichtung (10), geeignet für die Aufzucht von Jung- Krustentieren, wobei die Vorrichtung Folgendes umfasst:
einen für die Aufnahme von Wasser bestimmten zylinderförmigen Tank (12) von im Allgemeinen kreisförmigem Querschnitt; ein Rohr (36), welches sich entlang der Längsachse des Tanks (12) nach oben bis zu einer Position nahe an der Oberseite des Tanks erstreckt, und eine Kammer (30) unterhalb des Tanks (12), wobei sich das Rohr (36) aus der Kammer erstreckt; und **gekennzeichnet durch** eine Vielzahl ringförmiger Wannen (40), angeordnet als Stapel und befindlich zwischen dem Rohr (36) und dem zylinderförmigen Tank (12), wobei jede Wanne (40) Abteile (46) zur Aufnahme der Jung-Krustentiere begrenzt und die Wannen (40) in ihren Unterteilen Perforationen (42) für den Durchfluss von Wasser aufweisen; sowie ein Mittel (62), umfassend einen Biofilter (58) für das Durchleiten des Wassers **durch** das Rohr (36) und den Tank (12) wie auch **durch** den genannten Biofilter (58) in einer Nichtfütterungs-Betriebsart; sowie ein weiteres Mittel (70) für das Umwälzen von Wasser **durch** das Rohr (36) und den Tank (12) in einer Fütterungs-Betriebsart.

2. Vorrichtung nach Anspruch 1, wobei mindestens ein Umwälzungsmittel (53) mit der Basiszone (16) des Tanks (12) dergestalt verbunden ist, dass es einen wirbelnden Fluss von Wasser um die Basiszone (16) des Tanks (12) herum erzeugt.

3. Vorrichtung nach Anspruch 1 oder Anspruch 2, umfassend zwei Umwälzungsmittel (62, 70), wobei das Mittel für das Durchleiten des Wassers durch das Rohr (36) und den Tank (12) in einer Nichtfütterungs-Betriebsart ein erstes Umwälzungsmittel (62) umfasst, welches das Wasser durch den Biofilter (58) zirkulieren lässt.

4. Vorrichtung nach einem beliebigen der vorhergehenden Ansprüche, wobei das Umwälzungsmittel (70) für die Verwendung in der Fütterungs-Betriebsart so eingerichtet ist, dass es für eine Fließgeschwindigkeit sorgt, die der Fließgeschwindigkeit in der Nichtfütterungs-Betriebsart gleich ist oder geringer als diese ist.

5. Vorrichtung nach Anspruch 3, ebenso umfassend ein Mittel (64), um zu ermöglichen, dass Wasser aus dem ersten Umwälzungsmittel (62) abgelassen und erneut aufgefüllt wird.

6. Vorrichtung nach Anspruch 3 oder Anspruch 5, wobei das erste Umwälzungsmittel (62) auch ein weiteres Wasseraufbereitungsgerät umfasst.

7. Vorrichtung nach einem beliebigen der vorhergehenden Ansprüche, wobei jede Wanne (40) mit einem Drahtgewebe (47) abgedeckt ist.

8. Vorrichtung nach Anspruch 1 oder Anspruch 2, wobei die Vorrichtung (10) in der Nichtfütterungs-Betriebsart so eingerichtet ist, dass Wasser durch den Tank (12) in einer Weise eines einmaligen Durchlaufs durchgeleitet werden kann.

9. Verfahren für die Aufzucht von Jung-Krustentieren unter Verwendung einer Vorrichtung (10) nach einem beliebigen der vorhergehenden Ansprüche.

10. Verfahren nach Anspruch 9, umfassend das Umwälzen (62) des Wassers durch den Biofilter (58) über einen Zeitraum; und anschließendes Umwälzen (70) des Wassers ohne das Durchlaufen des Biofilters (58), während die Jung-Krustentiere mit Futter versorgt werden, wobei diese zwei Umwälzungsschritte abwechselnd und wiederholt angewendet werden.

## Revendications

1. Appareil (10) convenant pour la croissance de bébés crustacés, l'appareil comprenant : un réservoir cylindrique (12) de coupe transversale globalement circulaire servant à contenir de l'eau ; une conduite (36) s'étendant vers le haut le long de l'axe longitudinal du réservoir (12) jusqu'à une position proche du sommet du réservoir, et une chambre (30) située sous le réservoir (12), la conduite (36) s'étendant à partir de la chambre (30) ; et **caractérisé par** une pluralité de plateaux annulaires (40) disposés comme une pile et se trouvant entre la conduite (36) et le réservoir cylindrique (12), chaque plateau (40) définissant des compartiments (46) servant à loger les bébés crustacés, les plateaux (40) présentant des perforations (42) dans leur base pour l'écoulement d'eau ; et un moyen (62) comprenant un blofiltre (58) servant à faire passer de l'eau à travers la conduite (36) et le réservoir (12) et aussi à travers ledit biofiltre (58) dans un mode de non-alimentation ; et de plus un moyen (70) servant à remettre en circulation l'eau à travers la conduite (36) et le réservoir (12) dans un mode d'alimentation.

2. Appareil selon la revendication 1, dans lequel au moins un moyen de remise en circulation (53) est raccordé à la région de base (16) du réservoir (12) de manière à imposer un écoulement tourbillonnant d'eau autour de la région de base (16) du réservoir (12).

3. Appareil selon la revendication 1 ou la revendication 2, comprenant deux moyens de remise en circulation (62, 70), le moyen de faire passer de l'eau à travers le conduit (36) et le réservoir (12) dans un mode de non-alimentation étant un premier moyen de remise en circulation (62) qui fait circuler l'eau à travers le biofiltre (58).

4. Appareil selon l'une quelconque des revendications précédentes, dans lequel le moyen de remise en circulation (70) utilisé dans le mode d'alimentation est conçu pour produire un débit inférieur ou égal à celui du mode de non-alimentation.

5. Appareil selon la revendication 3, comprenant aussi un moyen (64) permettant le drainage de l'eau depuis le premier moyen de remise en circulation (62) et le remplissage.

6. Appareil selon la revendication 3 ou la revendication 5, dans lequel le premier moyen de remise en circulation (62) comprend aussi une autre unité de traitement de l'eau.

7. Appareil selon l'une quelconque des revendications précédentes, dans lequel chaque plateau (40) est recouvert d'une tôle grillagée (47).

8. Appareil selon la revendication 1 ou la revendication 2, dans lequel dans le mode de non-alimentation, l'appareil (10) est tel que l'eau peut traverser le réservoir (12) selon un mode de traversée unique.

9. Procédé d'élevage de bébés crustacés utilisant un appareil (10) tel que revendiqué dans l'une quelconque des revendications précédentes.

10. Procédé selon la revendication 9, comprenant la mise en circulation (62) de l'eau à travers le biofiltre (58) pendant un certain temps ; puis la remise en circulation (70) de l'eau sans la faire passer dans le biofiltre (58) alors qu'on procurer aux bébés crustacés de la nourriture, ces deux étapes de circulation étant appliquées alternativement et de manière répétée.
